# EUROPEAN PATENT APPLICATION

(11) **EP 4 303 834 A1**
(43) Date of publication of application: **10.01.2024**
(21) Application number: 23182224.8
(22) Date of filing: 28.06.2023
(51) Int. Cl.: G06V 20/56, G06V 20/70

(54) **ROAD CHANGE DETECTION METHOD, COMPUTING DEVICE, AND STORAGE MEDIUM**

(30) Priority: 07.07.2022 CN 202210803292
(71) Applicant: Beijing Tusen Zhitu Technology Co., Ltd., Beijing 100016 (CN)
(72) Inventor: SONG, Daiwei, Beijing, 10016 (CN); WEI, Jiahui, Beijing, 10016 (CN); XU, Ke, Beijing, 10016 (CN)
(74) Representative: Murgitroyd & Company

(57) **Abstract**

The present disclosure relates to a road change detection method, a computing device, and a storage medium, the road change detection method including: acquiring road data collected by a sensor, the road data including a first lane line, the first lane line including first datum points; acquiring a map corresponding to the road data, the map including a second lane line, the second lane line including second datum points; generating a road feature of a road corresponding to the road data based on the first lane line, the second lane line, and a projection relationship between the road data and the map; and inputting the road feature to a road detection model to obtain a result indicating whether the road has changed.

## Description

The present disclosure claims priority to Chinese patent application No. 202210803292.7, titled "ROAD CHANGE DETECTION METHOD, COMPUTING DEVICE, AND STORAGE MEDIUM", filed on July 07, 2022.

### TECHNICAL FIELD

The present disclosure relates to the field of computer technology and, more particularly, to a road change detection method, a computing device, and a storage medium.

### BACKGROUND

As the core module of an automatic driving system, a high-precision map based on prior knowledge may make up for the deficiency of sensors in an actual operation and improve the stability of the automatic driving system, making it an indispensable part of the automatic driving system. The high-precision map may clearly and accurately display the road condition everywhere, but in practical applications, lane lines of a road are likely to change, for example, a lane line disappears, or a new lane line is added, and such a change is not updated in the high-precision map, making the map less reliable. Therefore, it is necessary to determine timely whether the lane lines of the road have changed.

### SUMMARY

The present disclosure provides a road change detection method, a computing device, a storage medium, and a vehicle to solve or partially solve the above-mentioned problems.

In a first aspect of the embodiments of the present disclosure, a road change detection method is provided, including:
acquiring road data collected by a sensor, the road data including a first lane line, the first lane line including first datum points;
acquiring a map corresponding to the road data, the map including a second lane line, the second lane including second datum points;
generating a road feature of the road data based on the first lane line and the first datum points thereof, the second lane line and the second datum points thereof, and a projection relationship between the road data and the map; and
inputting the road feature to a road detection model to obtain a result indicating whether a road in the road data has changed.

In a second aspect of the embodiments of the present disclosure, a method for training a road detection model is provided, including:
acquiring a tagged training set, the training set including a plurality of pieces of road data and a tag indicating whether a lane change occurs in each piece of the road data, the road data including a first lane line, the first lane line including first datum points;
acquiring a map corresponding to the road data, the map including a second lane line, the second lane including second datum points;
generating a road feature of the road data based on the first lane line and the first datum points thereof, the second lane line and the second datum points thereof, and a projection relationship between the road data and the map; and
training the road detection model based on the road feature and the tag of the road data.

In a third aspect of the embodiments of the present disclosure, a computing device is provided, and the computing device includes one or more processors and a memory, where the memory stores one or more programs that, when executed by the one or more processors, cause the one or more processors to implement at least one of the road change detection method and the method for training the road detection model according to the present disclosure.

In a fourth aspect of the embodiments of the present disclosure, a computer-readable storage medium is provided, and the computer-readable storage medium stores a program that, when executed by a processor, implements at least one of the road change detection method and the method for training the road detection model according to the present disclosure.

According to the technical solution of the embodiments of the present disclosure, lane lines in a map are compared with the road data (e.g., a road image, a road point cloud, etc.) to generate a lane line feature, and a pre-trained road detection model is taken to detect whether the road corresponding to the road data changes, which shows a high detection accuracy and may indicate changes efficiently and quickly in real-time. After this, a map update procedure may also be automatically triggered to generate the latest version of the map according to the collected road data in response to a result indicating a change in the road.

### BRIEF DESCRIPTION OF THE DRAWINGS

To explain the embodiments of the present disclosure or the technical solutions in the prior art more clearly, a brief description will be given below of the drawings that are used in the description of the embodiments or the prior art, and it would be apparent for a person skilled in the art to obtain other drawings based on these drawings without any inventive effort.
FIG. 1 is a flowchart of a road change detection method 100 according to an embodiment of the present disclosure;
FIG. 2 is a flowchart of a road change detection method 200 according to another embodiment of the present disclosure;
FIG. 3 is a flowchart of a road change detection method 300 according to yet another embodiment of the present disclosure;
FIG. 4 is a flowchart of a method for training a road detection model 400 according to an embodiment of the present disclosure;
FIG. 5 shows a flowchart of a mapping method 500 according to yet another embodiment of the present disclosure;
FIG. 6 is a schematic diagram of a non-connectable lane according to an embodiment of the present disclosure; and
FIG. 7 is a block diagram of a computing device 700 according to an embodiment of the present disclosure.

### DETAILED DESCRIPTION

Reference will now be made in detail to the embodiments of the present disclosure, examples of which are illustrated in the accompanying drawings. It is to be understood that the present disclosure is to be considered illustrative and not restrictive. Various modifications and changes may be made by those skilled in the art based on the embodiments described herein, and all changes that come within the meaning and range of equivalency are intended to be embraced therein.

To facilitate a clear description of the technical solutions of the embodiments of the present disclosure, herein the words "first", "second", and the like, are used to differentiate the same or similar items having substantially the same function or action, and those skilled in the art will understand that the words "first", "second" , and the like, do not limit the number or order of execution.

The term "and/or", as used herein, is merely an association that describes associated objects and indicates that there may be three relationships, e.g., A and/or B, meaning that there are three cases, namely, A alone, A and B together, and B alone. In addition, the symbol "/", as used herein, generally indicates that the associated objects have an "or" relationship.

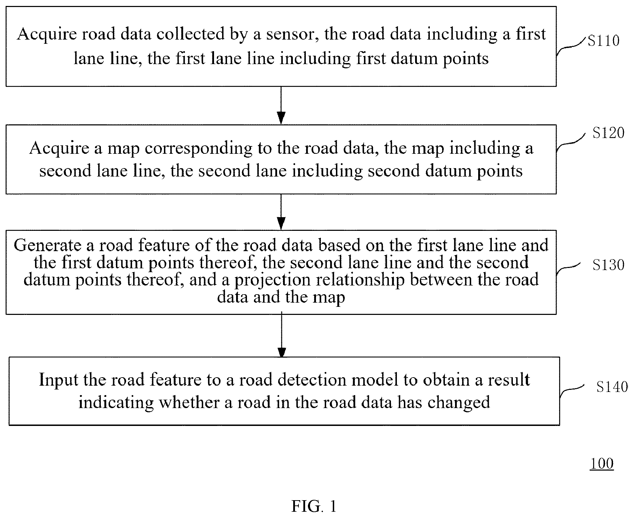

FIG. 1 is a flowchart of a road change detection method 100 (i.e., a road-mending detection method) according to an embodiment of the present disclosure. As shown in FIG. 1, the method 100 includes:
step S 110, acquiring road data collected by a sensor, the road data including a first lane line, the first lane line including first datum points;
step S 120, acquiring a map corresponding to the road data, the map including a second lane line, the second lane including second datum points;
step S130, generating a road feature of the road data based on the first lane line and the first datum points thereof, the second lane line and the second datum points thereof, and a projection relationship between the road data and the map; and
step S140, inputting the road feature to a road detection model to obtain a result indicating whether a road in the road data has changed.

In some embodiments, acquiring road data collected by the sensor in step S 110 includes:
acquiring a road data packet collected by a vehicle traveling on a road, wherein the sensor is installed on the vehicle, and the data collected by the sensor can be transmitted back to a remote platform in real-time or periodically (the platform may be a special detection platform or a mapping platform mentioned below), so that the remote platform determines whether the road changes according to the data received, and triggers a map update procedure when the road changes so as to generate the latest version of the map.

In an implementation, actual road information may be collected by a specific map collecting vehicle to generate road data packets. In another implementation, the actual road information may be collected by sensors of consumer's vehicles (e.g., trucks, automobiles, and the like, purchased by consumers) to generate the road data packets.

The data packet may include the road data (or sensor data) of a predetermined duration or a predetermined travel distance, and the road data may include imaging data of the road and a surrounding environment, a pose of the sensor for collecting the road data, and semantic information after the imaging data is detected, etc. The semantic information is, for example, obstacles, solid lane lines, dashed lane lines, and blocked lane line pixels in the detected road data.

For example, a partial area of a certain lane line is blocked by a vehicle or a tree, and in this case, to perform semantic detection of the road data in the embodiment of the present disclosure, it is allowed to determine lane line pixels, blocked lane line pixels, solid lane line pixels, dashed lane line pixels, and obstacle pixels, such as pixels of a vehicle, pedestrian or animal, in the frame of imaging. The imaging data may be input to a pre-trained semantic detection model to obtain the semantic information, and the semantic information may also be determined through various image processing methods, such as edge detection and connected domain detection. In addition, if pixels of a lane line in the road are detected, but the dashed line and the solid line are not distinguished, then a lane line mask may be projected onto a 3D ground surface, and the dashed line and the solid line may be distinguished according to a length of a projection onto the 3D ground surface, thereby determining whether the lane line before being projected is solid or dashed.

The road data collected by the sensor includes, but is not limited to, image data collected by an image collecting device, and point cloud data collected by a point cloud collecting device. The image collecting device may be a camera, and the point cloud collecting device may be, but is not limited to, a laser radar, a millimeter wave radar, a solid-state laser radar, etc.

The road data packet may further include a pose of the sensor or vehicle at different time stamps (or moments) when the sensor is collecting the road data. The pose of the sensor may be determined by various positioning sensors, such as an IMU/GNSS, GPS, lidar and camera. In the embodiments of the disclosure, position observation results of a plurality of sensors are combined to determine a pose of the camera, IMU, radar or vehicle pose for each frame of the road image being collected, and the poses of different devices may be converted from one to another based on a coordinate relationship. The pose includes at least one of a position and an attitude. The position includes, but is not limited to, two-dimensional and three-dimensional coordinate values of road points. The attitude represents the orientation of the vehicle, including pitch, yaw and roll angles. A corresponding piece of road data may be searched according to the pose of the sensor or time stamp, and then the map, such as a point cloud map and a semantic map, is updated according to the road data.

Each frame of the road data includes at least one first lane line, each first lane line includes at least one first datum point, and each datum point of the present disclosure has two-dimensional or three-dimensional coordinates. The first lane line includes at least one of first solid lines and first dashed lines. The solid lane line is a continuous long line in the road, and the dashed lane line is discrete short lines in the road. The first datum points include at least one of first solid line points and first dashed line points. Herein, the first solid line points include a first solid line center point, which, specifically, may be a series of discrete points on a center line of the solid line, and may also be discrete points on left and right boundary lines of the solid line. First dashed line center points include a series of discrete center points on the dashed line and may also include discrete points on the left and right boundary lines of the dashed line and dashed line corner points (i.e., dashed line vertices). That is, the first dashed line points include at least one of first dashed line corner points and the first dashed line center points. The embodiment of the present disclosure does not specifically limit the positional attributes of the solid line datum points and the dashed line datum points as long as the corresponding dashed line and solid line can be uniquely represented.

Given the pose of the sensor (or pose of the vehicle, such as GPS position) at the time of collecting each frame of the road image, the local map corresponding to each frame of the road image may be determined according to the pose of the sensor in step S 120. Generally, a semantic sub-map may be derived from a high-precision map, which may be a 3D map or a 2D map, according to the positioning information of the sensor or the vehicle. The semantic sub-map includes a plurality of second lane lines, each second lane line including at least one second datum point, each datum point having two-dimensional coordinates or three-dimensional coordinates. Similar to the first lane line, the second datum points include at least one of second solid line points and second dashed line points, the second solid line points including second solid line center points, specifically, including a series of discrete points on a center line of the solid line, or including discrete points on left and right boundary lines of the solid line. The second dashed line points include a center point of a dashed block, a series of discrete points on a center line of the dashed lines, and may also include four corner points of the dashed line. That is, the second dashed line points include at least one of second dashed line corner points and second dashed line center points.

To facilitate the coordinate calculation, in the embodiments of the present disclosure, both the map coordinates and the lane lines in the observed road data may be converted to IMU coordinates.

Furthermore, a display area of the local map may be the same as or different from a display area of the road data. Preferably, the local map is a map of a predetermined area where the vehicle is located, such as a circle, a square, or a rectangle centered on the vehicle, that is, the local map is a map within a predetermined distance, such as 60 to 80 meters, displaying the front, rear, left and right of the vehicle, although not limiting in this respect. The predetermined area where the vehicle is located includes a road to be detected now, and therefore a radius of the above-mentioned circle or a side length of the square or rectangle is greater than or equal to a length of a road section to be detected, where the road section may be the whole road or a part of the whole road. Preferably, whether the road is mended or not can be detected on a section-by-section basis, and therefore each time of matching with a certain frame of the road data, the local map within a range of 60 meters from the front, rear, left and right sides of the vehicle is selected and subjected to matching with the frame of the road data. Considering that the display area of the road data is associated with the imaging size of the sensor, the map of an area corresponding to the road data may be acquired according to the scale of the map. A lane line representation in the map may or may not be the same as a lane line representation in the road data. An interval between adjacent solid line points on the map (i.e., sparsity of the points) may be or may not be the same as the interval between adjacent solid line points in the image, and the present disclosure is not limiting in this respect.

In some embodiments, in step S130, the lane lines in the road data may be projected to a map (i.e., the local map in step S120), and the road feature may be derived from the original lane lines and the projected lane lines in the map, specifically including:
step S131, projecting the first lane line in the road data to the map according to a pose of the sensor to obtain a projected third lane line, the third lane line including third datum points corresponding to the first datum points; and
step S132, generating the road feature according to each second lane line and the second datum points thereof, and each third lane line and the third datum points thereof.

For example, in a case where a certain dashed lane line L1 in the image is projected onto the map according to the pose of the sensor, a projected lane line L3 is obtained; coordinates of four corners of the lane line L1 are A, B, C, and D, and points A', B', C' and D' are obtained after projection. The third lane line also includes at least one of a third solid line and a third dashed line, and if the first lane line subjected to projection is a solid line, the projected third lane line is still a solid line. The third datum points include at least one of third solid line points and third dashed line points, the third solid line points including discrete points on a center line of the solid line or boundary line, the third dashed line points including at least one of dashed line center points and dashed line corner points. After this, the road feature may then be generated from the original lane lines and datum points in the map, and the projected lane lines and datum points.

It should be understood that step S 130 further includes projecting a lane line in the map to the road data and calculating the road feature according to the original lane line and the projected lane line in the road data, specifically including:
step S133, projecting the second lane line in the map to the road data according to the pose of the sensor to obtain a projected fourth lane line, the fourth lane line including fourth datum points corresponding to the second datum points; and
step S 134, generating the road feature according to each first lane line and the first datum points thereof, and each fourth lane line and the fourth datum points thereof in the road data.

The way in which the road feature is calculated by projecting the lane lines in the map to the road data is similar to the way in which the road feature is calculated by projecting the imaged lane lines to the map and will not be described in further detail herein.

In some embodiments, the road feature includes at least one of the features: distance parameters relating to at least one of datum points or lane lines (such as distance parameters between two points, two lines, or between a point and a line); points number (such as a number of points in a predetermined region); lane lines number (such as a number of lane lines in a predetermined region); acreage parameters relating to blocked lane lines; number of pixels of a object. Further, the road feature comprises at least one of the features below.

Feature 1 is a first distance from the second solid line point to the third solid line point nearest thereto (i.e., a first distance from each of the second solid line points to the nearest third solid line point, or a first distance from each second solid line point to a third solid line point nearest to the second solid line point). Considering that there may be a plurality of second solid line points in each frame of the road data, feature 1 further includes an average value or a sum of the first distances corresponding to all the second solid line points in the map, respectively. That is, the second solid line points in the map are traversed, the first distance corresponding to each second solid line point is determined, and the average value and/or the sum of the determined plurality of first distances is calculated. Herein, the second solid line points are a series of discrete center points on the second solid line, and the third solid line points are a series of discrete center points on the third solid line. Given the two-or three-dimensional coordinates of each point, the third solid line point nearest to the second solid line point can be determined. Optionally, the first distance includes a distance from the second solid line center point (i.e., center point of the second solid line) to the third solid line center point nearest thereto.

Feature 2 is a second distance from the second dashed line point to the third dashed line point nearest thereto (i.e., a second distance from each of the second dashed line points to the nearest third dashed line point, or a second distance from each second dashed line point to a third dashed line point nearest to the second dashed line point). Feature 2 includes an average value or a sum of the second distances corresponding to all the second dashed line points in the map, respectively. That is, the second dashed line points in the map are traversed, a second distance corresponding to each second dashed line point is determined, and the average value and/or the sum of the determined plurality of second distances is calculated. Optionally, the second distance includes a distance from the second dashed line center point (i.e., center point of the second dashed line) to the third dashed line corner point (i.e., corner point of the third dashed line) nearest thereto. The principle of feature 2 is similar to that of feature 1 and will not be described in further detail again here.

Feature 3 is a third distance from the third dashed line point to the second dashed line point nearest thereto (i.e., a third distance from each of the third dashed line points to the nearest second dashed line point, or a third distance from each third dashed line point to a second dashed line point nearest to the third dashed line point). Feature 3 includes an average or sum of the third distance corresponding to all the third dashed line points in the map, respectively. That is, a plurality of third dashed line points projected to the map are traversed, a third distance corresponding to each third dashed line point is determined, and the average value and/or the sum of the determined plurality of third distances are calculated. Optionally, the third distance includes a distance from the third dashed line center point to the second dashed line center point nearest thereto.

Feature 4 is a number of the second dashed line points in a predetermined area where the third solid line is located. Feature 4 further includes an average value or a sum of the numbers of the second dashed line points corresponding to all the third solid lines in the map, respectively. Optionally, the number of the second dashed line points includes a number of the second dashed line corner points within the predetermined area where the third solid line is located. The predetermined area where the third solid line is located includes an area obtained by expanding the bounding box of the third solid line outward by a predetermined distance. Each of the solid lane lines and the dashed lane lines detected in the embodiments of the present disclosure has a bounding box thereof, the bounding box is expanded outward by a predetermined distance or a predetermined number of pixels, and the resulting area is the predetermined area where the third solid line is located.

Feature 5 is a number of the second solid line points in the predetermined area where the third solid line is located. Feature 5 includes an average or sum of the numbers of the second solid line points in all the predetermined areas where the third solid lines are located on the map. Optionally, the number of the second solid line points includes a number of the second solid line center points within the predetermined area where the third solid line is located.

Feature 6 is a number of the third dashed lines around which there containg no second dashed line point in the predetermined area. Herein, the number of the third dashed lines is initially 0, and the number of the third dashed lines is incremented by 1 for each predetermined area where the third dashed line is located containing no second dashed line point. For example, if there are five projected dashed lanes in the map currently, and there are three predetermined areas where the dashed lanes are located containing no dashed line points of the original map, then the number of feature 6 is three. Optionally, the predetermined areas where the third dashed lines are located include a circular area having a third dashed line center point as a circle center and a predetermined length greater than a length of the third dashed line as a radius. Optionally, the predetermined areas where the third dashed line is located include an area obtained by expanding the bounding box of the third dashed line outward by a predetermined distance.

Feature 7 is a proportion of an area of blocked lane lines to a total area of the lanes. In the embodiments of the present disclosure, lane line pixels, non-lane line pixels, and blocked lane line pixels in each frame of the road data can be output, so that the area of the blocked lane lines and the total area of lane lines can be calculated, specifically, calculated according to the number of pixels or geometric relationship, which will not be described in detail herein. The blocked lane line means that pixels of the lane line is covered by other objects such as vehicles and pedestrians.

Feature 8 is a number of obstacle pixels in a predetermined area in front of the sensor. Herein, the predetermined area in front of the sensor may be an area in a range of 5 to 10 m in front of the sensor that collects the road data but is not limiting in this respect. Obstacles include moving obstacles, particularly moving obstacles such as vehicles, pedestrians, and animals.

In some embodiments, the road feature may further include at least one of a lane width, a number of lane lines in a lane, a lane line length, a sequence number of a lane line in the present lane, a sixth distance from the second solid line to the third solid line nearest thereto, a seventh distance from the third solid line to the second solid line nearest thereto, and an eighth distance from the third solid line point to the second solid line point nearest thereto. Herein, the sixth distance includes a distance from the third solid line center line to the second solid line center point, the seventh distance includes a distance from the third solid line center line to the second solid line center point, and the eighth distance includes a distance from the third solid line center point to the second solid line center point nearest thereto. The latter three distance-related features may likewise include an average and/or a sum of the distances of all objects in the present frame of the image or point clouds. In addition, in the above features, in addition to the average value and the sum, common statistic indexes like a maximum value, a minimum value, a median value, and an average value of the top-n values may be used to summarize the distances or the numbers of points, and the present disclosure is not limiting in this respect. The distances and the numbers of points mentioned below can also be used in alternative with other statistic indexes, which will not be repeated. The above different types of road features may constitute a high-dimensional vector, and then a model prediction is possible based on the high-dimensional vector. m type of road features may constitute a m-dimensional vector.

Thereafter, in step S 150, the generated road feature is input to a pre-trained road detection model. The input of the road detection model comprises the road feature of the road, the output of the road detection model comprises whether the road has changed and/ or the road change type.

In an implementation, the road detection model may output whether the road has changed, for example, output 1 when there is a change, 0 when there is no change, as well as a confidence level of the road change.

In another implementation, the road detection model may further output road change types, and a confidence level of each road change type. The road change type includes at least one of: no change, disappearance of solid lane lines, disappearance of dashed lane lines, offset of the solid lane lines, offset of the dashed lane lines, newly added solid lane lines, newly added dashed lane lines, the solid lane lines changed to the dashed lane lines, the dashed lane lines changed to the solid lane lines, widening of the road, and narrowing of the road. Each change type may correspond to an output identifier, and thus the road change type may be determined based on the output identifier. Apparently, a person skilled in the art may also add other road change types of municipal engineering according to actual situations, and the present disclosure is not limiting in this respect. Furthermore, the map of the present disclosure may store road identifiers for each road, and thus it is possible to finally determine whether the roads corresponding to the different road identifiers have changed.

It should be understood that a road with a long length may have some road segments that have changed and some road segments that have not, and that the road includes multiple images. Therefore, n some embodiments, a frame-by-frame detection is possible of whether a road in an image per frame or a point cloud per frame changes, that is, the road feature is generated on a frame-by-frame basis, and a determination of whether road mending occurs is based on the generated road feature. Further, given the pose of the sensor when each frame of the road image is collected, the position of the image collecting vehicle can be determined; each road has a road identifier, and each road section also has a road identifier of the pertaining road, hence multiple frames of the road data pertaining to one road can be determined. The method 100 may then also determine a plurality of pieces of road data pertaining to one road and determine whether the road has changed based on the detection result of the plurality of pieces of road data.

For example, detection results of multiple frames pertaining to one road is acquired, and among them, a detection result with the greatest number of occurrences is taken as the detection result for the road. Assuming that a road has 20 frames of image, the detection results of 15 frames of image all indicate that the road changes, and the results of the other 5 frames are that the road does not change, a determination is then made that the road changes. The same applies to outputting the detection result of a specific road change type, that is, a change type with the greatest number of occurrences is the change type of the road, which will not be described in detail here.

In other embodiments, it is also possible to first determine a plurality of pieces of road data pertaining to one road, calculate the road feature from the plurality of pieces of road data, and determine whether the road has changed based on the road feature.

For example, for the plurality pieces of road data of one road, and for each frame of the road data, corresponding third lane lines and third datum points are determined in the manner of step S 120 to step S 140, respectively, and the road feature of each frame of the road data is calculated. Thereafter, in step S 150, an overall road feature is calculated based on the road features of the plurality frames of the road data, and the overall road feature is input to the road detection model to obtain the result indicating whether the road has changed and the change type.

The above method of detecting whether or not a road has changed by model prediction is referred to as a first detection method, and the result thereof is a first detection result. In the embodiments of the present disclosure, another way of spatial coordinate calculation is further provided to detect whether a road has changed, referred to as a second detection method, and the result thereof is a second detection result. For each frame of the road image, the first detection method is applicable for prediction, and the second detection method is also applicable for prediction. Besides, the two prediction results can be combined to obtain the final result of whether the road changes.

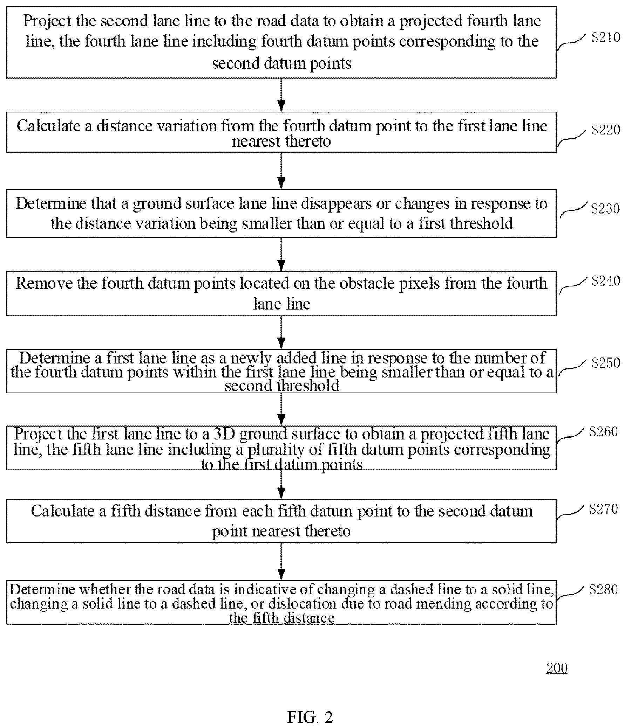

FIG. 2 shows a flowchart of a road change detection method 200 according to another embodiment of the present disclosure, where the second detection method is applied to detect whether there is a change in the road data per frame, for example, whether there is a ground surface lane line disappearance or lane diversion, whether there is a newly added lane line, whether there is a dashed line changed to a solid line, a solid line changed to a dashed line, or dislocation due to road mending. As shown in FIG. 2, the method 200 includes:
step S210, projecting the second lane line to the road data to obtain a projected fourth lane line, the fourth lane line including fourth datum points corresponding to the second datum points;
step S220, calculating a distance variation from the fourth datum point to the first lane line nearest thereto; and
step S230, determining that a lane line disappears or changes in response to the distance variation being greater than or equal to a first threshold. A greater value of the distance variation indicates a higher confidence level of ground surface lane line disappearance or lane diversion, and in the present disclosure, a confidence level of the ground surface lane line disappearance or lane diversion may be calculated based on the distance variation.

Specifically, the fourth lane lines are subject to separate calculations to calculate the distance variation from the fourth datum point within the single fourth lane line to the first lane line nearest to the coordinate position thereof. The fourth lane line and the first lane line are both located in the road data such as an image or a point cloud, and the distance variation may take a value of a vertical shortest distance from a point to a straight line. Thereafter, the distance variations of all the fourth datum points in a fourth lane line are summed or averaged, and if the sum or average value is greater than or equal to the first threshold, a determination is made that a disappearance of the original lane line on the ground surface or the road diversionoccures, and in this case, there is a lane line in the map and there is no lane line on the actual road.

The fourth lane lines include at least one of fourth solid lines and fourth dashed lines, the fourth datum points include at least one of fourth solid line points and fourth dashed line points, the fourth solid line points include a series of points on a center line of the solid line, and the fourth dashed line points include at least one of dashed line center points and dashed line corner points. Therefore, the distance variation from the fourth datum point to the first lane line nearest thereto may include the distance variation from the fourth solid line point to the first solid line nearest thereto, or the distance variation from the fourth dashed line point to the first dashed line nearest thereto.

In some embodiments, the method 200 may further include:
step S240, removing at least one of the fourth datum points located on the obstacle pixels from the fourth lane line; and
step S250, determining the first lane line as a newly added lane line in response to the number of the fourth datum points within the first lane line being smaller than or equal to a second threshold. A smaller number of the fourth datum points indicates a higher confidence level that the first lane line is a newly added lane line, and in the present disclosure, the confidence level of the newly added lane line is calculated based on the number of the fourth datum points.

As described above, the data packets collected in the present disclosure include the road data, the pose of the sensor, the lane line pixels detected for the road data, obstacle pixels, etc. Given the obstacle pixels in the road data, the fourth datum point projected onto the obstacle pixels may be removed in step S240.

In addition, in the embodiment of the present disclosure, a connecting area of two adjacent dashed blocks may be added to one of the dashed lane lines when detecting a dashed lane line in the road data. That is, each first dashed line includes both the dashed line block itself and the connecting area of the dashed line block to a next dashed line block, or the connecting area of the dashed line block to a previous dashed line block. For convenience, each dashed line is defined to include a next connecting area or a previous connecting area.

In general, when tagging a training set of a semantic segmentation model, each dashed lane line is tagged to include a dashed line block itself and an adjacent next or previous connecting area, and then the trained semantic segmentation model directly outputs the dashed line block and the adjacent connecting area thereof as a dashed lane line, namely, the first dashed line.

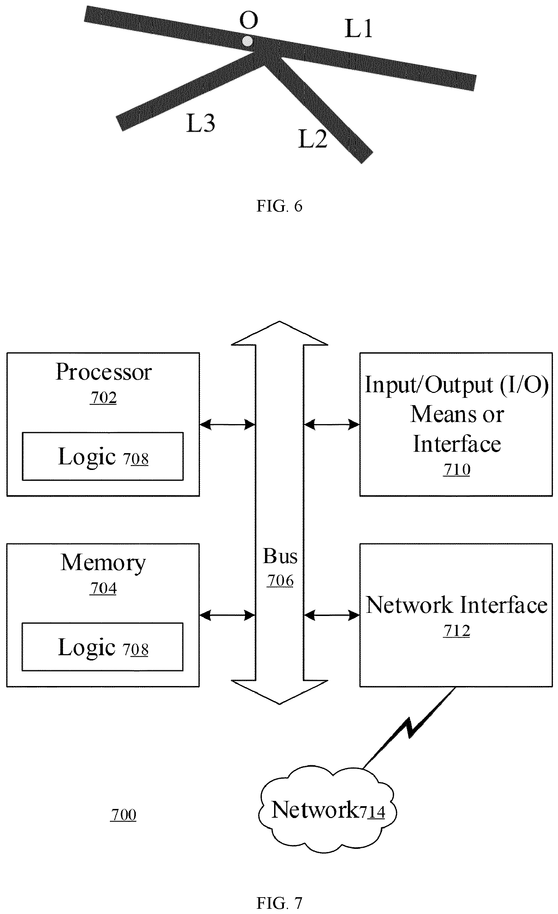

Optionally, step S240 may further include removing at least one of the fourth datum points projectd by the second datum points located on an unconnectable lane line from the fourth lane line. In the embodiment of the present disclosure, a road identifier may be assigned to each road, each road may be further divided into a plurality of road sections, and a road section identifier may be assigned to each road section. The unconnectable lane line refers to a lane line that is impossible for a vehicle to enter in the current direction. As shown in FIG. 6, the vehicle is on a road L1, and at an entrance O of a certain ramp, two possible roads are in front of the vehicle, namely, the road L1 and a road L2; and a road L3 is impossible for the vehicle to enter, hence the road L3 is the unconnectable road section to the road L1, and the lane line on the road L3 is the unconnectable lane line of the road section on which the vehicle currently travels. The projection of map points on an unconnectable lane line to the road image interferes with the data processing, and such projected points shall be removed.

Optionally, step S250 may include:
step S251, calculating a number of the fourth solid line points within the first solid line and a number of the fourth dashed line points within the first dashed line, that is, counting a number of projected solid line map points in each solid line block or a number of projected dashed line map points in each dashed line block in the image;
step S252, determining that the first solid line is a newly added lane line in response to the number of the fourth solid line points being smaller than or equal to the second threshold; and
step S253, determining that the first dashed line is a newly added lane line in response to the number of the fourth dashed line points being smaller than or equal to the second threshold.

Optionally, prior to step S250, the method further includes selecting the first lane lines having an area greater than or equal to the third threshold, that is, removing at least one of the first lane lines having a tiny area. The third threshold is significantly lower than the area of a common dashed lane line, and a specific value thereof can be set by a person skilled in the art on his own initiative. Therefore, in step S251, the selected first solid lines and first dashed lines are processed. In the case of a smaller number of the fourth solid line points, the confidence level of newly added solid lines is higher; in the case of a smaller number of the fourth dashed line points, the confidence level of the newly added dashed lines is higher. In the present disclosure, the confidence level of a corresponding result may be calculated based on the number of the fourth solid line points and the number of the fourth dashed line points.

In some embodiments, the method 200 may further include:
step S260, projecting the first lane line to a ground surface (such as 3D ground surface) to obtain a projected fifth lane line, the fifth lane line including a plurality of fifth datum points corresponding to the first datum points, wherein the projection can be performed according to a ground surface equation (such as a 3D ground surface equation), which is common in the art and will not be described in detail herein;
Step S270, calculating a fifth distance from each fifth datum point to the second datum point nearest thereto in coordinate position; and
step S280, determining, according to the fifth distance, whether a dashed line changeing to a solid line, a solid line changing to a dashed line, or dislocation due to road mending occurs with the road data. A greater fifth distance indicates a higher confidence level of a dashed line changed to a solid line, a solid line changed to a dashed line, or the dislocation due to road mending.

Herein, the fifth lane line includes at least one of a fifth solid line and a fifth dashed line, the fifth datum points include at least one of fifth solid line points and fifth dashed line points; the fifth solid line points include a series of discrete points on a center line of the solid line, and the fifth dashed line points includes center points and/or corner points of the fifth dashed line.

Accordingly, step S270 may include calculating a distance from each fifth solid line point to the second solid line point nearest thereto or calculating a distance from the fifth solid line to the second solid line nearest thereto. If the distance is greater than a fourth threshold, a determination is made in step S280 that there is a solid line changed to a dashed line or dislocation due to road mending, that is, the road image shows a solid line while the map shows a dashed line, or the lane lines in the map and the image are dislocated. Here, the determination can be made on a lane-by-lane basis, that is, the distances of all the fifth solid line points on each fifth solid line are calculated; the determination may also be made on a single frame of data, that is, the distances of all the fifth solid lines in the single frame data are calculated to obtain a final distance.

Similarly, step S270 may further include calculating a distance from each fifth dashed line point to the second dashed line point nearest thereto. The distance may likewise include a sum or an average of the distances corresponding to all fifth dashed line points, and the calculation may be performed for a single dashed line, for example, for four corner points of a dashed line, the minimum distance of the four corner points is taken as the distance of the dashed line. If the distance is equal to or greater than the fourth threshold, a determination is made in step S280 that there is a dashed line changed to a solid line or dislocation due to road mending, that is, the map shows a solid line and the road image shows a dashed line, or the lane lines in the map and the image are dislocated. In addition, the fifth distance is related to the confidence level of the detection result, and a greater the fifth distance indicates a higher confidence level of a solid line changed to a dashed line, a dashed line changed to a solid line, or dislocation due to road mending.

It should be noted that the various thresholds mentioned in the embodiments of the present disclosure, such as the first to fourth thresholds, can be set by a person skilled in the art on his own initiative as appropriate, and the present disclosure is not limiting in this respect.

Through the method 200 described above, in embodiments of the present disclosure, a second detection result may be output for each frame of the road data. The second detection result includes whether a road changes, the road change type, and the confidence level, wherein the confidence level is calculated according to a distance variation corresponding to different road change types, the number of map points, and the shortest distance.

As such, for each frame of the road data of a road section, a first detection result and a second detection result are obtained, respectively, in the present disclosure, and the first detection result and the second detection result may both only include the confidence level of whether the road changes, and may further include the confidence level of a specific road change type; as a result, the two detection results may be combined to obtain the final detection result of the road section, for example, whether the road changes and the specific change type.

In an implementation, the road change type of the road section may be obtained based on the first detection result and the second detection result of a plurality of frames of the road data, respectively, and the final road change type may be determined by combining the road change types obtained by the two methods, respectively. In another implementation, the road change type of each frame of the road data may be obtained according to the first detection result and the second detection result of the frame of the road data, and the road change type of the road section may be obtained by combining the road change types of the frames of the road data of the road section. There are many ways to combine the two results to evaluate and obtain the overall result, and a person skilled in the art would have been able to select a suitable way on his initiative as appropriate, and the present disclosure is not limiting in this respect.

For example, when comparing the first and second detection results for a single frame of data or a single road section, the result for the present frame of data may be determined based on the confidence level of the two detection results. To combine the first detection results of a plurality of frames of data, a result with the highest confidence level may be selected; alternatively, a result with the highest number of occurrences is selected; alternatively, the top-n detection results with high confidence levels are selected, and then the top-n detection results selected through the two methods, respectively, are combined to obtain the final detection result, which will not be further described here.

If the detected final result indicates a road change, information about the road section may be derived, including, but not limited to, start and stop timestamps for collecting the road section data. Additionally, a displayed road section may be manually verified. Optionally, the method 100 may further include: updating the map of the road section on a mapping platform based on the collected road data packet of the road section in response to the road change.

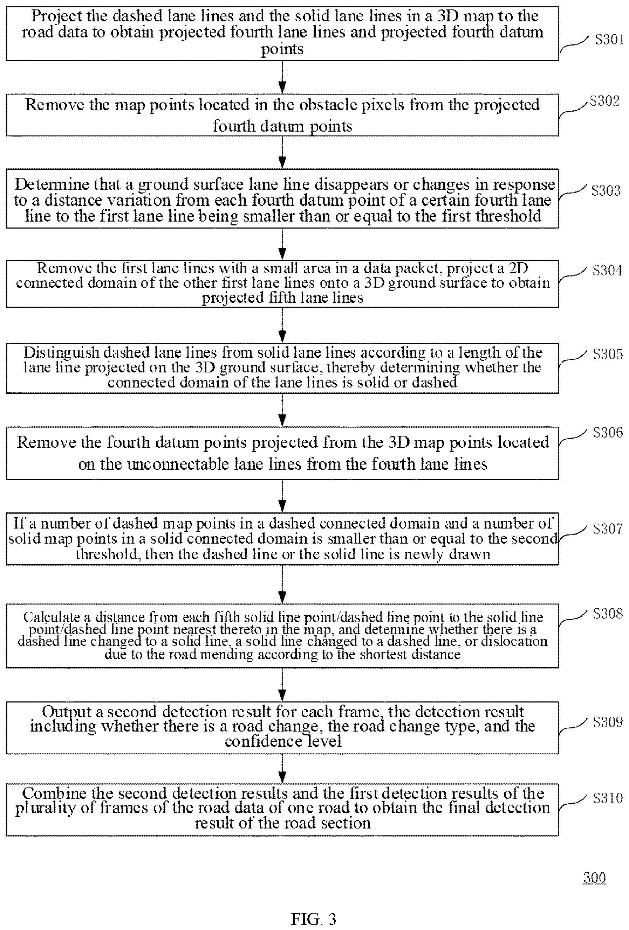

FIG. 3 is a flowchart of a road change detection method 300 according to another embodiment of the present disclosure, which is a more detailed version of the second detection method. As shown in FIG. 3, the method 300 includes:
step S301, projecting the dashed lane lines and the solid lane lines in a map to the road data to obtain projected fourth lane lines and projected fourth datum points (2D map points);
step S302, removing at least one of the map points located in the obstacle pixels from the projected fourth datum points;
step S303, calculating a distance variation from each fourth datum point on each fourth lane line to the first lane line, and determining that a ground surface lane line disappears or the lane is diverted in response to a calculated distance variation of a certain fourth lane line being smaller than or equal to the first threshold, wherein, at this time, there is a lane line in the map and there is no lane line in the actual road;
step S304, removing at least one of the first lane lines with a small area in a data packet, projecting a 2D connected domain of the other first lane lines onto a ground surface(such as 3D ground surface) to obtain projected fifth lane lines, wherein the fifth lane lines include fifth datum points corresponding to each of the first lane lines, and the fifth datum points include at least one of fifth solid line points and fifth dashed line points;
step S305, distinguishing dashed lane lines from solid lane lines according to a length of the lane line projected on the ground surface, thereby determining whether the connected domain of the lane lines is solid or dashed;
step S306, removing at least one of the fourth datum points projected from the 3D map points located on the unconnectable lane lines from the fourth lane lines, for example, removing at least one of the map points on a ramp branch;
step S307, calculating a number of dashed map points in a dashed connected domain and a number of solid map points in a solid connected domain, respectively, wherein if the number of map points is small, the dashed line or the solid line is newly drawn, and at this time, there is no lane line in the map but there is a lane line in the actual road;
step S308, calculating a distance from each fifth solid line point to the solid line point nearest thereto in the map and a distance from each fifth dashed line point to the dashed line point nearest thereto in the map in step S304, and determining whether there is a dashed line changed to a solid line, a solid line changed to a dashed line, or dislocation due to the road mending according to the shortest distance;
step S309, outputting a second detection result for each frame, the detection result including whether there is a road change, the road change type, and the confidence level, wherein the road change type may indicate which step in steps S303, S307 and S308 is of concern or directly point out which change type happens; the confidence level is derived from the distance variation, the number of map points or the shortest distance corresponding to the three types; and
step S310, combining the second detection results of the plurality of frames of the road data of one road section and the first detection results of the plurality of frames of the road data output by the road detection model to obtain the final detection result of the road section.

Specific details of the method 300 are disclosed in the description based on the methods 100 and 200 and will not be repeated here.

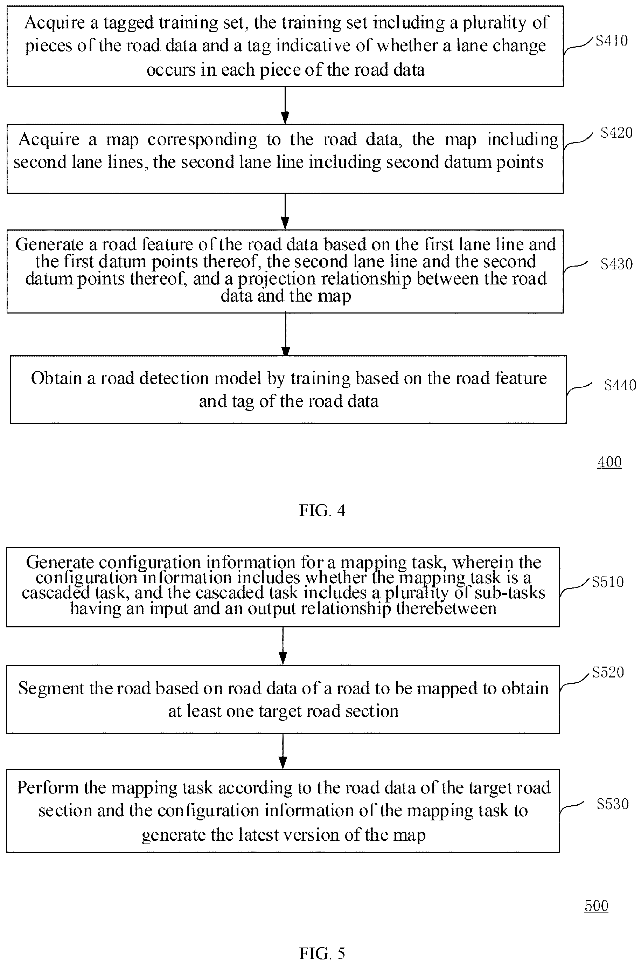

The application of real vehicle data to road change detection is described above, the following will describe how to train the road detection model. FIG. 4 illustrates a method 400 for training a road detection model according to an embodiment of the present disclosure, and as shown in FIG. 4, the method 400 includes the steps below.

In step S410, a tagged training set is acquired, and the training set includes a plurality of pieces of the road data and a tag indicating whether a lane change occurs in each piece of the road data. The road data includes first lane lines, each first lane line including first datum points. The tag includes whether the road has changed or not, and may further include a road change type, which has been described in detail above and will not be repeated herein.

In step S420, a map corresponding to the road data is acquired, the map including second lane lines, the second lane line including second datum points; reference can be made to step S 120 to understand this step, which will not be described in detail herein.

In step S430, a road feature of the road data is generated based on the first lane line and the first datum points thereof, the second lane line and the second datum points thereof, and a projection relationship between the road data and the map; reference can be made to step S 130 to understand this step, which will not be described in detail herein.

In step S440, a road detection model is obtained by training based on the road feature and tag of the road data. Herein, the road detection model may be a XGBoost decision tree model and may also be other common neural network models; based on the tag and the generated road feature of each piece of the road data, the XGBoost decision tree model is trained to obtain a trained road detection model. The specific model structure, parameters and hyperparameters may be set by a person skilled in the art on his own initiative as appropriate, and the present disclosure is not limiting in this respect.

As described above, a change in the current road triggers a map update procedure on the mapping platform. In some embodiments, the mapping platform has a display interface for generating configuration information for the mapping task and performing the mapping task. FIG. 5 is a flowchart of a mapping method 500 according to an embodiment of the present disclosure, and as shown in FIG. 5, the method 500 includes:
step S510, generating configuration information for a mapping task, wherein the configuration information includes whether the mapping task is a cascaded task, the cascaded task including a plurality of sub-tasks having an input and an output relationship therebetween;
step S520, segmenting the road based on road data of a road to be mapped to obtain at least one target road section; and
step S530, performing the mapping task according to the road data of the target road section and the configuration information of the mapping task to generate the latest version of the map.

In some embodiments, the road to be mapped is a road where a road-mending change is detected, and a detection platform for detecting whether the road has changed may be differentiated from a mapping platform; at this time, after the detection platform detects that road mending has occurred, the mapping platform is notified to update the map of the road section. Surely, the detection platform may also be the mapping platform, and the data packet of the road to be mapped has been imported to the mapping platform when the detection of a road-mending change is performed. Accordingly, if a determination is made in the mapping platform that the road has changed, execution of step S5 10 may be automatically triggered. The plurality of sub-tasks include, but are not limited to, point cloud generation, point cloud post-processing, post-processing file pushing, speed limit information extraction, traffic light marking, traveling track extraction, single-packet terrain extraction, multi-packet terrain optimization, sensor data alignment, single-packet lane line extraction, and multi-packet lane line optimization. That is to say, the configuration information also indicates whether the mapping task is any one or more of the point cloud generation, point cloud post-processing, post-processing file pushing, speed limit information extraction, traffic light marking, traveling track extraction, single-packet terrain extraction, multi-packet terrain optimization, sensor data alignment, single-packet lane line extraction, and multi-packet lane line optimization. Single-packet-based processing may all be referred to as single-packet optimization, and multi-packet-based processing may all be referred to as multi-packet optimization.

Herein, the point cloud generation includes extracting a point cloud in a data packet. The point cloud post-processing includes performing point cloud registration on the extracted a plurality of frames of the point cloud. The post-processing file pushing includes performing format conversion on a file after post-processing and pushing same to a cloud. The speed limit information extraction includes extracting and displaying the speed limit information of each lane. The traffic light marking includes extracting and displaying traffic lights in each lane. The traveling track extraction includes extracting a traveling track of a mapping vehicle. The single-packet terrain extraction involves extracting terrain information in a single data packet. The multi-packet terrain optimization includes performing joint optimization on terrain information about a plurality of data packets to obtain a piece of jointly optimized terrain information. The sensor data alignment includes aligning the acquired plurality pieces of sensor data according to an acquisition time stamp of one frame, so as to determine the image and point cloud data at one acquisition moment. The single-packet lane line extraction includes extracting lane line information in a single data packet, such as a lane line solid line and a lane line dashed line. The multi-packet lane line optimization includes performing joint optimization on lane line information about a plurality of data packets to obtain jointly optimized lane line information.

A cascade relationship may be established among a plurality of sub-tasks for generating a cascaded task. Thus, the configuration information also indicates whether the mapping task is a cascaded task, the cascaded task including a plurality of sub-tasks having input and output relationships to each other. For example, the system creates a cascaded task based on an imported road data packet or a generated road section to: firstly, generate the point cloud; secondly, post-process the point cloud; thirdly, extract the single-packet lane; finally, perform multi-packet lane line optimization. Another cascaded task may be created to: firstly, generate a point cloud; secondly, post-process the point cloud; and then perform the single-packet terrain optimization. The mapping platform of the present disclosure automatically processes input and output logical relationships in the cascaded task, and a user only needs to determine partial configuration information about each sub-task.

In further embodiments, the configuration information further indicates a first task type to which the mapping task belongs, the first task type including an integrated task, an independent task, or a batch task.

Herein, the independent task refers to a single task, and a corresponding map is generated based on the single task. The Independent task is typically directed to a single target road section in the target road for generating a map of the single target road section.

The integrated task includes a plurality of sub-tasks, wherein the plurality of sub-tasks have an input and an output relationship to each other, and generally, the output of a certain plurality of sub-tasks is the input of a certain sub-task. For example, assuming that the integrated task has n sub-tasks, the first n-1 sub-tasks may be independent from each other, and the outputs of the n-1 sub-tasks together serve as the input of an n-th sub-task, thereby finally obtaining a map of the integrated task. The integrated task may be directed to a plurality of target road sections in the target road for generating a map covering the plurality of target road sections as a whole, and each target road section may have corresponding task configuration information.

The batch task may also include a plurality of sub-tasks, but the plurality of sub-tasks of the batch task are independent from each other; the only thing is that the plurality of sub-tasks may share some configuration parameters, and thus corresponding maps can be generated in batches. The batch task may also be directed to a plurality of target road sections of the target road, each target road section corresponding to one or more sub-tasks, and each target road section may have corresponding task configuration information for mapping one target road section. Therefore, one batch task will eventually generate a map for each target road section separately.

In some embodiments, each sub-task in the integrated task may generate configuration information separately, and the plurality of sub-tasks of the batch task may share all or part of the configuration information. The configuration information of the present disclosure may further include a host identifier, an identifier of the vehicle for collecting the data packet, start and stop time stamps corresponding to the data packet, a data packet identifier, an operator identifier, a general mapping task identifier, a task generation time, etc.

In some embodiments, the method 500 may further include: storing each sub-task in the batch task, the integrated task, and the independent task in a message queue in the order of the task generation time, so as to process each task according to the message queue. Here, the sub-tasks in the batch task are independent from each other, in their nature to respectively complete a plurality of mapping tasks, and the integrated task and the independent task are in their nature to complete a single mapping task, hence the sub-tasks of the batch task, the integrated task, and the independent task are put to a message queue as pending tasks, so as to perform sequential processing according to the task generation time.

In an implementation, in step S520, road segmentation may be performed based on the timestamp input or selected by the user on the display interface, and the road segmentation may be performed based on at least one segmentation line marked by the user on the display interface, where the segmentation line that may be needed for the task is automatically generated based on the segmentation line in the history mapping task. Herein, information about at least one segmentation line generated each time can be saved, and an association relationship between the at least one segmentation line and the target road is established. Here, the information about the segmentation line includes at least one of a length of the segmentation line, coordinates of each point on the segmentation line, and coordinates of a point where the segmentation line intersects the target road. Therefore, if the segmentation line is a straight line, the length or the coordinates of a starting point may be stored; alternatively, the coordinates of the starting point and an ending point may be stored. If the segmentation line is a curve, the segmentation line can be represented and stored as coordinates of a series of discrete points from the starting point to the ending point. If one segmentation line covers a plurality of target roads, a midpoint of the segmentation line in two adjacent roads can be determined according to the points where the segmentation line intersects each road, and the segmentation line is divided and allocated to the roads on both sides with the midpoint as a dividing point, and the road identifiers of the pertaining roads are recorded.

Here, the association relationship among the target road, the target road section, and the segmentation line may be stored. That is, the road corresponding to the road data packet imported in each mapping task, the target road section segmented from the road, and the determined segmentation line are stored. Optionally, in the present disclosure, it is also possible to store a set of road identifiers or names covered by the segmentation line, for example, to store a set of road identifiers covered by each segmentation line separately, or store a set of road identifiers covered by each group of segmentation lines separately (one group of segmentation lines representing two segmentation lines corresponding to a segmentation starting point and a segmentation ending point).

In some embodiments, the method 500 may further include generating a topology network according to input and output relationships among a plurality of sub-tasks, wherein, specifically, it is possible to generate the topology network based on a data packet through a single import, and also possible to generate the topology network based on each mapping task. The topology network can display the progress of the whole mapping task and the completion of each sub-task.

According to the present disclosure, the completion of each sub-task may be monitored in real-time, and each sub-task may have the completion status thereof marked, the completion status including to be executed, starting up, in execution, successful execution, failure of execution, etc. It should be appreciated that if the mapping task fails, or a sub-task fails, a notification is sent to the user. Completed tasks may have their task execution time marked. For example, based on an input and output relationship of the topology network, when a certain sub-task is in execution, other subsequent sub-tasks are to be executed; when the execution of a preceding sub-task is almost successful, a next sub-task closest thereto can be placed in the starting-up state, so as to improve the efficiency of the task execution. As such, the method 500 may also analyze the mapping task based on the topological network, for example, to determine the completion status of the mapping task.

It can be seen therefrom that in the present disclosure, through automatic analysis, mended road sections may be quickly and automatically identified, which improves map maintenance efficiency and reduce labor costs. Furthermore, it is also possible herein to obtain a road change detection result based on a road detection model and calculations of spatial coordinates, respectively, and combine the detection results of the two methods to obtain a more accurate road change detection result. In addition, it is further possible herein to manage each step in the mapping process by building a high-precision mapping platform, making the entire mapping process clearer, more efficient and applicable. The present disclosure employs a more general cascaded task scheduling scheme to split a complete mapping task to sub-tasks that are automatically triggered for execution; when the output of a preceding sub-task is obtained, the execution of the next sub-task is automatically triggered; the message queue is taken to learn the change of task status, avoiding unnecessary polling. Moreover, while the task is running, the platform interface may display all information related to the task, such as input and output, configuration parameters, and start and end moments of the task. Moreover, the platform also provides a statistical analysis function to facilitate viewing all tasks under a certain hierarchical task and all tasks executed by a certain data package, etc.

FIG. 7 is an illustration of a machine in an exemplary form of a computing device 700 for implementing the method 100 - 500 within which an instruction set, when executed, and/or processing logic, when initiated, may cause the machine to perform any one or more of the methods described and/or claimed herein. In alternative embodiments, the machine operates as a standalone device, or may be connected (e.g., networked) to other machines. In a networked deployment, a machine may operate in the identity of a server or client machine in a server-client network environment, or as a peer in a peer-to-peer (or distributed) network environment. A machine may be a personal computer (PC), a laptop computer, a tablet computing system, a personal digital assistant (PDA), a cellular telephone, a smart phone, a network appliance, a set-top box (STB), a network router, switch or bridge, or any machine capable of executing a set of instructions that specify actions to be taken by that machine, either sequentially or otherwise, or initiate processing logic. Further, although only a single machine is illustrated, the term "machine" may also be understood to include any collection of machines that individually or jointly execute a set of instructions (or sets of instructions) to perform any one or more of the methods described and/or claimed herein.

The example computing device 700 may include a data processor 702 (e.g., a system SoC, a general-purpose processing core, a graphics core, and optionally other processing logic) and a memory 704 (e.g., memory) that may communicate with each other via a bus 706 or other data transfer system, the computing device 700 may also include various input/output (I/O) means and/or interfaces 710, such as a touch screen display, an audio jack, a voice interface, and an optional network interface 712. In exemplary embodiments, the network interface 712 may include one or more radio transceivers configured to interface with any one or more standard wireless and/or cellular protocols or access technologies, for example, second-generation (2G), 2.5-generation, third-generation (3G), fourth-generation (4G) and next-generation radio access for cellular systems, global system for mobile communications (GSM), general packet radio service (GPRS), enhanced data GSM environment (EDGE), wideband code division multiple access (WCDMA), LTE, CDMA2000, WLAN, wireless router (WR), etc. The network interface 712 may also be configured for use with various other wired and/or wireless communication protocols including TCP/IP, UDP, SIP, SMS, RTP, WAP, CDMA, TDMA, UMTS, UWB, WiFi, WiMax, Bluetooth ^{©}, IEEE802.11x, etc. In essence, the network interface 812 may include or support almost any wired and/or wireless communication and data processing mechanism by which information/data may travel between the computing device 700 and another computing or communication system via a network 714.

The memory 704 can represent a machine-readable medium (or a computer-readable storage medium) on which is stored one or more sets of instructions, software, firmware, or other processing logic (e.g., a logic 708) that implements any one or more of the methods or functions described and/or claimed herein. The logic 708 or a portion thereof may also be fully or at least partially disposed within the processor 702 during execution by the computing device 700. As such, the memory 704 and the processor 702 may also constitute a machine-readable medium (or a computer-readable storage medium). The logic 708 or a portion thereof may also be configured as processing logic or logic, at least a portion of which is partially implemented in hardware. The logic 708 or a portion thereof may also be transmitted or received over the network 714 via the network interface 712. Although the machine-readable medium (or a computer-readable storage medium) of the exemplary embodiments may be a single medium, the term "machine-readable medium" (or computer-readable storage medium) should be taken to include a single non-transitory medium or multiple non-transitory media (e.g., a centralized or distributed database and/or associated caches and computing systems) that store the one or more sets of instructions. The term "machine-readable medium" (or the computer-readable storage medium) may also be taken to include any non-transitory medium that is capable of storing, encoding or carrying a set of instructions for execution by the machine and that cause the machine to perform any one or more of the methods of the various embodiments, or that is capable of storing, encoding or carrying data structures utilized by or associated with such a set of instructions. The term "machine-readable medium" (or the computer-readable storage medium) can thus be interpreted to include, but is not limited to, solid-state memories, optical media, and magnetic media.

The disclosed and other embodiments, modules, and functional operations described in this document may be implemented in digital electronic circuitry, or in computer software, firmware, or hardware (including the structures disclosed in this document and their structural equivalents), or in combinations of one or more of them. The disclosed and other embodiments may be implemented as one or more computer program products, that is, one or more modules of computer program instructions encoded on a computer-readable medium for execution by, or to control the operation of, data processing apparatus. The computer-readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including, for example, a programmable processor, a computer, or multiple processors or computers. In addition to hardware, the apparatus can include code that creates an execution environment for the computer program in question, such as code that constitutes processor firmware, a protocol stack, a database management system, an operating system, or a combination of one or more of them. A propagated signal is an artificially generated signal, such as an electrical, optical or electromagnetic signal generated by a machine, that is generated to encode information to be transmitted to a suitable receiver device.

A computer program (also referred to as a program, software, software application, script, or code) can be written in any form of programming language, including compiled or interpreted languages, and it can be deployed in any form, including as a standalone program or as a module, component, subroutine, or other units suitable for use in a computing environment. A computer program does not necessarily correspond to a file in a file system. A program may be stored in a portion of a file that holds other programs or data (e.g., one or more scripts stored in a markup language document), or in a single file dedicated to the program in question, or in multiple collaboration files (e.g., files that store one or more modules, subroutines, or portions of code). A computer program can be deployed to be executed on one computer or on multiple computers that are located at one site or distributed across multiple sites and interconnected by a communication network.

The processes and logic flows described in this document may be executed by one or more programmable processors executing one or more computer programs to perform functions by operating on input data and generating output. The processes and logic flows may also be performed by, and apparatus may be implemented as, special-purpose logic circuitry, e.g., an FPGA (field programmable gate array) or an ASIC (application-specific integrated circuit).

Processors suitable for the execution of a computer program include, by way of example, both general- and special-purpose microprocessors, and any one or more processors of any kind of digital computer. Generally, a processor will receive instructions and data from a read-only memory or a random-access memory or both. The essential elements of a computer are a processor for executing instructions and one or more memory devices for storing instructions and data. Typically, a computer will also include, or be operatively coupled to receive data from or transfer data to, or both, one or more mass storage devices (e.g., magnetic, magneto-optical disks, or optical disks) for storing data. However, a computer need not have such a device. Computer-readable media suitable for storing computer program instructions and data include all forms of non-volatile memory, media and memory devices, including by way of example semiconductor memory devices, such as EPROM, EEPROM and flash memory devices; A magnetic disk, such as an internal hard disk or a removable disk; magneto-optical disks; and CD-ROM discs and DVD-ROM discs. The processor and memory may be supplemented by, or incorporated in, special-purpose logic circuitry.

While this disclosure contains many details, these details should not be construed as limitations on the scope of any of the disclosure or what may be claimed, but rather as descriptions of features that may be specific to particular embodiments of the disclosure. Certain features that are described in this disclosure in the context of separate embodiments can also be implemented in combination in a single embodiment. Conversely, various features that are described in the context of a single embodiment can also be implemented in multiple embodiments separately or in any suitable sub-combination. Furthermore, although features may be described above as acting in certain combinations and may even be claimed initially or as such, one or more features from a claimed combination may be omitted from the combination in some cases, and the claimed combination may be directed to a sub-combination or variation of a sub-combination.

Similarly, while operations are depicted in the drawings in a particular order, it should not be understood that such operations need to be performed in the particular order shown, or in sequential order, or that all illustrated operations need to be performed to achieve a desired result. Moreover, the separation of various system components in the embodiments described in this disclosure should not be understood as requiring such separation in all embodiments.

Only some implementations and examples are described, and other implementations, enhancements, and variations may be made based on what is described and illustrated in this disclosure.

The description of the embodiments described herein is intended to provide a general understanding of the structure of various embodiments, and they are not intended to serve as a complete description of all the elements and features of the components and systems that might make use of the structures described herein. Many other embodiments will be apparent to those of ordinary skill in the art upon reviewing the description provided herein. Other embodiments may be utilized and derived such that structural and logical substitutions and changes may be made without departing from the scope of the present disclosure. The figures herein are merely representative and may not be drawn to scale. Some proportions may be increased while others may be minimized. The specification and drawings are, accordingly, to be regarded in an illustrative rather than a restrictive sense.

Some embodiments implement functionality in two or more specific interconnected hardware modules or devices, wherein related control and data signals are communicated between and through the modules, or as part of an application specific integrated circuit. Thus, software, firmware, and hardware implementations are preferable for the exemplary system.

Although exemplary embodiments or examples of the present disclosure have been described with reference to the accompanying drawings, it is to be understood that the above exemplary discussion is not intended to be exhaustive or to limit the disclosure to the precise forms disclosed. Many modifications and variations are possible in light of the above teaching. Accordingly, the disclosed subject matter should not be limited to any single embodiment or example described herein, but rather should be construed in breadth and scope in accordance with the appended claims.

## Claims

1. A road change detection method, comprising:
acquiring road data collected by a sensor, the road data comprising a first lane line, the first lane line comprising first datum points;
acquiring a map corresponding to the road data, the map comprising a second lane line, the second lane line comprising second datum points;
generating a road feature of a road corresponding to the road data based on the first lane line, the second lane line, and a projection relationship between the road data and the map; and
inputting the road feature to a road detection model to obtain a result indicating whether the road has changed.

2. The method according to claim 1, wherein generating the road feature of a road corresponding to the road data based on the first lane line, the second lane line, and the projection relationship between the road data and the map comprises:
projecting the first lane line to the map according to a pose of the sensor to obtain a projected third lane line, the third lane line comprising third datum points corresponding to the first datum points;
generating the road feature according to the second lane line, the second datum points, the third lane line and the third datum points.

3. The method according to claim 1 or 2, wherein
a output of the road detection model comprises a road change type of the road;
the road change type comprises at least one of: no change, disappearance of solid lane lines, disappearance of dashed lane lines, offset of the solid lane lines, offset of the dashed lane lines, newly added solid lane lines, newly added dashed lane lines, the solid lane lines changed to the dashed lane lines, the dashed lane lines changed to the solid lane lines, widening of the road, and narrowing of the road.

4. The method according to any one of claims 1-3,
wherein the method further comprising:
determining a plurality of frames of road data pertaining to one road section; and
determining whether the road section changes according to a detection result of the plurality of frames of road data;
wherein acquiring the road data collected by the sensor comprises:
acquiring a road data packet collected by the sensor mounted on the vehicle traveling on the road, wherein the road data packet comprises the road data, a pose of the sensor, pixels of a solid lane line, pixels of a dashed lane line, and a blocked lane line in the road data as detected.

5. The method according to claim 2, wherein
the first lane line comprises at least one of a first solid line and a first dashed line;
the second lane line comprises at least one of a second solid line and a second dashed line;
the third lane line comprises at least one of a third solid line and a third dashed line; the first datum points comprise at least one of first solid line points within the first solid line and first dashed line points within the first dashed line;
the second datum points comprise at least one of second solid line points within the second solid line and second dashed line points within the second dashed line;
the third datum points comprise at least one of third solid line points within the third solid line and third dashed line points within the third dashed line.

6. The method according to claim 5, wherein the third dashed line is one of a plurality of third dashed lines, the road feature comprises at least one of:
a first distance from each of the second solid line points to the nearest third solid line point;
a second distance from each of the the second dashed line points to the nearest third dashed line point;
a third distance from each of the third dashed line points to the nearest second dashed line point;
a number of the second dashed line points in a predetermined area where the third solid line is located;
a number of the second solid line points in the predetermined area where the third solid line is located;
a number of the third dashed lines around which there existing no second dashed line point in the predetermined area;
a proportion of an area of a blocked lane line to a total area of lanes; or
a number of obstacle pixels in a predetermined area in front of the sensor.

7. The method according to claim 6, wherein the road feature further comprises at least one of
an average value or a sum of the first distances corresponding to the second solid line points in the map;
an average value or a sum of the second distances corresponding to all the second dashed line points in the map;
average value or a sum of the third distances corresponding to the third dashed line points in the map;
an average value or a sum of the number of the second dashed line points corresponding to the third solid lines in the map;
an average value or a sum of the number of the second solid line points in the predetermined areas where the third solid lines are located in the map.

8. The method according to claim 6 or 7, wherein
each of the first solid line points, the second solid line points and the third solid line points comprises a solid line center point;
the first dashed line points comprises at least one of first dashed line corner points and first dashed line center points;
the second dashed line points comprises at least one of second dashed line corner points and second dashed line center points;
the third dashed line point comprises at least one of third dashed line corner points and third dashed line center points;
the second distance comprises a distance from each second dashed line center point to the nearest third dashed line corner point;
the third distance comprises a distance from each third dashed line center point to the nearest second dashed line center point;
the number of the second dashed line points comprises a number of the second dashed line corner points in the predetermined area where the third solid line is located;
the number of the second solid line points comprises a number of the second solid line center points in the predetermined area where the third solid line is located.

9. The method according to claim 6, wherein
the predetermined area where the third solid line is located comprises an area obtained by expanding a bounding box of the third solid line outward by a predetermined distance;
the predetermined area where the third dashed line is located comprises a circular area taking one of the third dashed line center points as a circle center and a preset length as a radius, the preset length being greater than a length of the third dashed line;
the number of the third dashed lines is initially 0 and the number of the third dashed line is incremented by one for each predetermined area where the third dashed line is located containing no second dashed line point.

10. The method according to any one of claim 1-9, wherein the first lane line is one of a plurality of first lane lines, the method further comprises:
projecting the second lane line to the road data to obtain a projected fourth lane line, the fourth lane line comprising fourth datum points corresponding to the second datum points;
calculating a distance variation from each fourth datum point to the nearest first lane line;
determining that the first lane line disappears or changes in response to the distance variation being greater than or equal to a first threshold;
removing at least one of the fourth datum points located on obstacle pixels;
removing at least one of the fourth datum points projectd by the second datum points located on an unconnectable lane line from the fourth lane line;
determining the first lane line as a newly added lane line in response to the number of the fourth datum points within the first lane line being smaller than or equal to a second threshold.

11. The method according to claim 10, wherein the fourth datum points comprise at least one of fourth solid line points and fourth dashed line points, and determining the first lane line as the newly added lane line in response to the number of the fourth datum points within the first lane line being smaller than or equal to the second threshold comprises:
calculating a number of the fourth solid line points within the first solid line and a number of the fourth dashed line points within the first dashed line;
determining that the first solid line as the newly added lane line in response to the number of the fourth solid line points being smaller than or equal to the second threshold; and
determining the first dashed line as the newly added lane line in response to the number of the fourth dashed line points being smaller than or equal to the second threshold.

12. The method according to any one of claims 1-11, further comprising:
projecting the first lane line to a ground surface to obtain a projected fifth lane line, the fifth lane line comprising fifth datum points corresponding to the first datum points;
calculating a fifth distance from each fifth datum point to the nearest second datum point;
determining, according to the fifth distance, whether a dashed line changing to a solid line, a solid line changing to a dashed line, or road dislocation due to road mending occurs in the road.

13. A method for training a road detection model, comprising:
acquiring a tagged training set, the training set comprising a plurality of pieces of road data and a tag indicating whether a lane line change occurs in each piece of the road data, the road data comprising a first lane line, the first lane line comprising first datum points;
acquiring a map corresponding to the road data, the map comprising a second lane line, the second lane comprising second datum points;
generating a road feature of a road corresponding to the road data based on the first lane line, the second lane line, and a projection relationship between the road data and the map; and
training the road detection model based on the road feature and the tag of the road data.

14. A computing device, comprising:
a processor, a memory, and a computer program stored in the memory and executable on the processor, wherein
the processor, when executing the computer program, performs a method according to any of claims 1 to 13.

15. A computer-readable storage medium, wherein a computer program is stored thereon, and the computer program, when executed by a processor, implements a method according to any of claims 1 to 13.
